# EUROPÄISCHE PATENTSCHRIFT

(11) **EP 2 717 684 B1**
(45) Veröffentlichungstag und Bekanntmachung des Hinweises auf die Patenterteilung: **12.08.2015**
(21) Anmeldenummer: 12719591.5
(22) Anmeldetag: 30.04.2012
(51) Int. Cl.: A01N 25/04, A01N 25/30

(54) **HOLZSCHUTZMITTEL MIT VERBESSERTER PENETRATION UND LANGZEISTABILITÄT**
WOOD PROTECTION AGENT HAVING IMPROVED PENETRATION AND LONG-TERM STABILITY
AGENT DE PROTECTION POUR LE BOIS À PÉNÉTRATION ET À STABILITÉ À LONG TERME AMÉLIORÉES

(30) Priorität: 10.06.2011 DE 102011103955
(43) Veröffentlichungstag der Anmeldung: 16.04.2014
(73) Patentinhaber: Kurt Obermeier GmbH & Co. KG, 57319 Bad Berleburg (DE)
(72) Erfinder: JÜNGEL, Peter, 57319 Bad Berleburg (DE); PALLASKE, Michael, 79585 Steinen (DE); HELLKAMP, Sascha, 57319 Bad Berleburg (DE)
(74) Vertreter: Zeitler Volpert Kandlbinder Patent- und Rechtsanwälte Partnerschaft mbB
(86) Internationale Anmeldenummer: PCT/EP2012/001859
(87) Internationale Veröffentlichungsnummer: WO 2012/167859

(56) Entgegenhaltungen:
- WO-A2-2008/076807
- DE-A1- 19 640 874

## Beschreibung

Die vorliegende Erfindung betrifft Holzschutzmittel mit verbesserter Penetration und Langzeitstabilität und insbesondere Holzschutzmittel auf Wasserbasis, die Wirkstoffemulsionen enthalten, deren Emulsionspartikel eine Polyelektrolytumhüllung aufweisen.

Bedingt durch neue gesetzliche Rahmenbedingungen, die in den letzten Jahren durch Änderungen des Chemikaliengesetzes und die Einführung der Biozidprodukte-Richtlinie (BPD) geschaffen wurden, steht für den Holzschutz nur noch eine stark eingeschränkte Anzahl an Bioziden zur Verfügung. Insbesondere für den Schutz von Holz im Erdkontakt ist die Verwendung einiger bewährter Wirkstoffe entweder nicht mehr erlaubt oder das Ende ihrer Verwendungsmöglichkeit ist vorgezeichnet. Andererseits ist die nachhaltige Verwendung einheimischer Holzarten für alle Anwendungsbereiche im Boden- und Wasserkontakt ohne chemische Schutzmaßnahmen nicht möglich.

Eine Vielzahl der zur Zeit verfügbaren Biozide für Holzschutzmittel kommt aus dem Pflanzenschutz und ist durch eine relativ gute Bioabbaubarkeit im Boden gekennzeichnet. Während eine kurzfristige fungizide Wirkung im Pflanzenschutz häufig erwünscht ist (Zerfall der Biozide nach 90 Tagen), stellt sie im Holzschutz ein klares Ausschlusskriterium dar. Als Grund für die relativ kurze Lebensdauer der organischen Biozide wird zumeist deren Zugänglichkeit für und deren Abbaubarkeit durch bodenlebende Mikroorganismen (z.B. Bakterien) angenommen. In Holzschutzmitteln, die für den Schutz von Hölzern im Erdkontakt vorgesehen sind, werden daher unter anderem kationische Wirkstoffe mit bakteriziden Nebeneffekten aus der Gruppe der quaternären Ammoniumverbindungen (BAC, DDAC, DDAP, ATMAC, usw.) als Biozid verwendet, die auch als Emulgator für zusätzliche Biozide dienen können. Sowohl die quaternären Ammoniumverbindungen als auch die anderen, in Holzschutzmitteln verwendeten organischen Biozide sind aber nach wie vor bioabbaubar; die quaternären Ammoniumverbindungen aufgrund ihrer bakteriziden Nebeneffekte meist etwas langsamer als die organischen Biozide. Die gegenseitige Verlängerung der Lebensdauer der Biozide in verschiedenen Biozid-Kombinationen und -Formulierungen ist im Stand der Technik bekannt.
Alle kationischen Verbindungen, wie zum Beispiel diejenigen aus der Offenlegungsschrift DE 196 40874 A1, zeigen in wässrigen Formulierungen eine mehr oder weniger stark ausgeprägte Affinität zu einer Holzoberfläche. Die positiven Teilladungen der kationischen Verbindungen treten in Wechselwirkung mit den stationären negativen Teilladungen an der Holzoberfläche, so dass die kationischen Verbindungen dort immobilisiert werden. Dies hat zur Folge, dass das ins Holz eindringende Schutzmittel im oberflächennahen Bereich sehr schnell an kationischen Verbindungen verarmt und nur ein sehr geringer Anteil der kationischen Verbindungen die tiefer gelegenen Holzbereiche im Inneren erreicht. Für wasserunlösliche organische Biozide, die über kationische Verbindungen emulgiert wurden, entsteht dasselbe Verteilungsmuster. Die kationischen Emulsionen brechen bevorzugt im oberflächennahen Bereich, lagern dort das ehemals emulgierte Biozid ab und nur ein sehr geringer Anteil des organischen Biozids erreicht tiefere Bereiche im Holz. Durch Maskierung der positiven Teilladung der kationischen Tenside mit geeigneten Schleppmitteln kann die Eindringtiefe zwar begrenzt verbessert werden, eine homogene Wirkstoffverteilung im Holz wird aber in der Regel nicht erreicht.

Der vorliegenden Erfindung liegt daher die Aufgabe zugrunde, die Eindringtiefe von Holzschutzmitteln auf Wasserbasis, die kationische Wirkstoffemulsionen enthalten, so zu gestalten, dass der Wirkstoff auch tiefer im Inneren gelegene Holzbereiche erreicht und im Holz homogen verteilt wird, und dass zusätzlich ein weitestgehender Schutz des Wirkstoffs vor einem enzymatischem Abbau durch Mikroorganismen bereitgestellt wird.

Diese Aufgabe wird erfindungsgemäß dadurch gelöst, dass in Holzschutzmitteln auf Wasserbasis die kationische Oberflächenladung von Emulsionspartikeln durch Umhüllen der Emulsionspartikel mit geeigneten Polyelektrolyten neutralisiert oder in eine anionische Oberflächenladung überführt wird, und die auf den Emulsionspartikeln ausgebildete Hülle aus Polyelektrolyten den Eintritt von Enzymen, die den Wirkstoff abbauen könnten, mechanisch verhindert.

Die vorliegende Erfindung stellt demgemäß ein Holzschutzmittel auf Wasserbasis bereit, umfassend eine Biozid-enthaltende wässrige Emulsion, die mindestens einen bioziden Wirkstoff und mindestens einen kationischen Emulgator enthält und der mindestens eine biozide Wirkstoff durch den mindestens einen kationischen Emulgator unter Bildung von Wirkstoff-Emulsionspartikeln emulgiert ist, wobei die Wirkstoff-Emulsionspartikel jeweils von einer mindestens einschichtigen Polyelektrolythülle umgeben sind, so dass die Nettoladung des umhüllten Wirkstoff-Emulsionspartikels Null oder negativ ist.

Bei dem erfindungsgemäßen Holzschutzmittel werden die Penetrationseigenschaften der Biozide durch Neutralisation der kationischen Oberflächenladung der Emulsionspartikel oder Überführen derselben in eine anionische Oberflächenladung deutlich verbessert und es wird im Kesseldruckverfahren eine nahezu homogene Wirkstoffverteilung über den imprägnierbaren Bereich im Holz erreicht. Ferner wird durch den mechanischen Schutz der Polyelektrolyt-Umhüllung der biologische Abbau der Wirkstoffe der Emulsionspartikel weitestgehend verzögert oder verhindert und die Schutzwirkung des Holzschutzmittels deutlich verlängert. Schließlich werden über die mechanische Immobilisierung der Emulsionspartikel Wirkstoffverluste über Auswaschung und Verdunstung aus dem Holz minimiert und die umweltbezogenen Eigenschaften behandelter Hölzer deutlich verbessert.

Gemäß einer Ausführungsform der vorliegenden Erfindung ist die Polyelektrolythülle einschichtig und aus einem anionischen Polyelektrolyten ausgebildet.

Gemäß einer bevorzugten Ausführungsform der vorliegenden Erfindung ist die Polyelektrolythülle mehrschichtig und abwechselnd aus einem anionischen Polyelektrolyten und einem kationischen Polyelektrolyten ausgebildet, wobei die äußerste Schicht aus einem anionischen Polyelektrolyten besteht. Diese bevorzugte Ausführungsform stellt auf mechanischem Weg sicher, dass praktisch keine mikrobiellen Exo-Enzyme in die umhüllten Emulsionspartikel eindringen und den biologischen Abbau des Wirkstoffs bewirken können. In weiteren bevorzugten Ausführungsformen liegen drei Polyelektrolytschichten, besonders bevorzugt fünf Polyelektrolytschichten oder mehr vor.

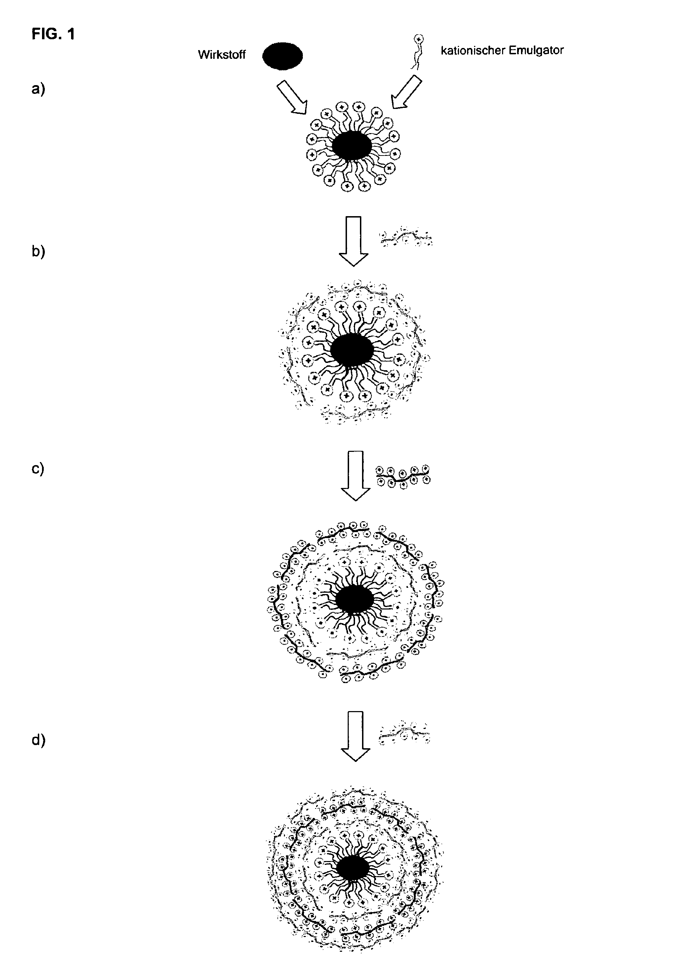

Der Vorgang der Veränderung der Oberflächenladung von kationischen Emulsionspartikeln durch mehrfache Zugabe von Polyelektrolyten mit unterschiedlicher Ladung ist exemplarisch in der Fig. 1 gezeigt. Gemäß Schritt a) in Fig. 1 wird zunächst durch Vereinigen eines Wirkstoffpartikels mit Molekülen eines kationischen Emulgators ein Emulsionspartikel erzeugt, das aufgrund des kationischen Emulgators eine positive Oberflächenladung aufweist. Dann werden im Schritt b) Polyanionen zugesetzt, die sich aufgrund ihrer entgegengesetzten Ladung auf der Oberfläche des Emulsionspartikels ablagern und eine homogene, negativ geladene Hülle um das Emulsionspartikel ausbilden. Im Schritt c) werden anschließend Polykationen zugesetzt, die sich aufgrund ihrer entgegengesetzten Ladung auf der Oberfläche der Polyanionenhülle des Emulsionspartikels ablagern und eine homogene, positiv geladene Hülle um das Emulsionspartikel ausbilden. Durch die Ablagerung einer zweiten Polyelektrolythülle wird die Porengröße, d.h., die Größe der Zwischenräume zwischen den einzelnen Polyelektrolytmolekülen, deutlich verkleinert. In einem letzten Schritt d) werden schließlich erneut Polyanionen zugesetzt, die sich aufgrund ihrer entgegengesetzten Ladung auf der Oberfläche der Polykationenhülle des Emulsionspartikels ablagern und eine homogene, negativ geladene Hülle um das Emulsionspartikel ausbilden. Durch die Ablagerung einer dritten Polyelektrolythülle wird die Porengröße noch weiter verkleinert. Diese Vorgehensweise ist in anderen Fachgebieten an sich bekannt und wird als Layer-by-Layer Beschichtungstechnologie bezeichnet.

Wie vorstehend erwähnt, hat die mehrschichtige Umhüllung zur Folge, dass die Zugänglichkeit des umhüllten Wirkstoffs für mikrobielle Exo-Enzyme sehr stark eingeschränkt oder sogar völlig beseitigt wird, so dass ein biologischer Abbau des Wirkstoffs durch die Exo-Enzyme entsprechend stark eingeschränkt oder vollständig verhindert wird.

Die erreichbare Porengröße beträgt abhängig von dem oder den verwendeten Polyelektrolyten und der Anzahl der Polyelektrolytschichten der Hülle 1 nm bis 30 nm, vorzugsweise 5 nm bis 15 nm. Die Porengröße wird in an sich bekannter Weise mittels Transmissions-Elektronenmikrospie bestimmt, beispielsweise mit einem Transmissionselektronenmikroskop Typ JEM-2100 der Firma JEOL Ltd., Tokyo, Japan.

Erfindungsgemäß kann als kationischer Emulgator jedweder kationische Emulgator verwendet werden, der dem einschlägigen Fachmann bekannt ist. Beispiele für geeignete kationische Emulgatoren umfassen quaternäre Ammoniumverbindungen und quaternäre Phosphoniumverbindungen oder eine Kombination davon.

Um die biozide Wirkung des erfindungsgemäßen Holzschutzmittels zu verstärken, ist der kationische Emulgator gemäß einer bevorzugten Ausführungsform der vorliegenden Erfindung jedoch ein biozider kationischer Emulgator. Beispiele für geeignete biozide kationische Emulgatoren umfassen quaternäre Ammoniumverbindungen, wie beispielsweise die Chlorid-, Bromid-, Borat-, Propionat-, Lactat-, Benzoat- und/oder Carbonatsalze von 1,1'-Dimethyl-4,4'-bipyridinium, N-Benzyl-2-(2,6-dimethylphenylamino)-N,N-diethyl-2-oxoethanaminium, Alkyldimethylbenzylammonium, Benzyldimethyltetradecylammonium, Benzyldimethyldodecylammonium, Didecyldimethylammonium, Cocoalkyltrimethylammonium, Didecylpolyoxyethyl-ammonium, N,N-Didecyl-N-methyl-poly-(oxyethyl)-ammonium, Diisobutylphenoxyethoxyethyldimethylbenzylammonium, 1-Hexadecylpyridinium, Hexadecyltrimethylammonium, Tetrabutylammonium, und die Acetat-, Chlorid-, Bromid-, Borat-, lodid-, Propionat- und/oder Carbonatsalze quaternärer Phosphoniumverbindungen, wie beispielsweise Benzyltriphenylphosphonium, Butyltriphenylphosphonium, Ethyltriphenylphosphonium, Methyltriphenylphosphonium, Tetraphenylphosphonium, oder eine Kombination davon.

Aufgrund der vorteilhaften Eigenschaften einer besonders guten Emulgierfähigkeit bei gleichzeitig guter biozider, insbesondere bakterizider Wirkung, ist der biozide kationische Emulgator gemäß einer bevorzugten Ausführungsform der vorliegenden Erfindung eine quaternäre Ammoniumverbindung.

Beispiele für geeignete quaternäre Ammoniumverbindungen umfassen Chlorid-, Bromid-, Borat-, Propionat- und/oder Carbonatsalze von N,N-Bis(3-aminopropyl)-dodecylammonium, Alkyldimethylbenzylammonium, Benzyldimethyltetradecylammonium, Benzyldimethyldodecylammonium, Didecyldimethylammonium, Cocoalkyltrimethylammonium, Didecylpolyoxyethylammonium und N,N-Didecyl-N-methyl-poly-(oxyethyl)-ammonium.

Gemäß einer bevorzugten Ausführungsform der vorliegenden Erfindung ist der biozide Wirkstoff aus Fungiziden, Insektiziden oder einer Kombination davon ausgewählt.

Als Fungizide können beispielsweise die folgenden Verbindungen einzeln oder in einer Kombination eingesetzt werden:
Triazole, wie Amitrol, Azocyclotin, BAS 480F, Bitertanol, Difenoconazol, Fenbuconazol, Fenchlorazol, Fenethanil, Fluquinconazol, Flusilazol, Flutriafol, Imibenconazol, Isazofos, Myclobutanil, Opus, Paclobutrazol, Penconazol, Tetraconazol, Triadimefon, Triadimenol, Triapenthenol, Triflumizol, Uniconazol, 2-(1-Chlorcyclopropyl)-1-(2-chlorphenyl)-3-(1 H-1,2,4-triazol-1-yl)propan-2-ol, 2-(tert-Butyl)-1-(2-chlorphenyl)-3-(1H-1,2,4-triazol-1-yl)propan-2-ol, (±)-is-1-(4-Chlorphenyl)-2-(1H-1,2,4-triazol-1 -yl)-cycloheptanol, Azaconazol (1-{[2-{2,4-Dichlorphenyl)-1,3-dioxolan-2-yl]methyl}-1H-1,2,4-triazol), Propiconazol (1-[2-(2,4-Dichlorphenyl)-4-propyl-1,3-dioxolan-2-yl]methyl-1H-1,2,4-triazol), Tebuconazol (1-p-Chlorphenyl-4,4-dimethyl-3(1H-1,2,4-triazol-1-yl-methyl)pentan-3-ol), Cyproconazol (2-(4-Chlorphenyl)-3-cyclopropyl-1-(1H-1,2,4-triazol-1-yl)butan-2-ol, Metconazol (5-[(4-Chlorphenyl)methyl]-2,2-dimethyl-1-(1H-1,2,4-triazol-1-yl-methyl)cyclopentanol; Imidazole, wie Imazalil, Pefurazoat, Prochloraz, Triflumizol, 2-(1-tert-Butyl)-1-(2-chlorphenyl)-3-(1,2,4-triazol-1-yl)-propan-2-ol;
Thiazolcarboxanilide, wie 2',6'-Dibrom-2-methyl-4-trifluormethoxy-4'-trifluormethyl-1,3-thiazol-5-carboxanilid;
Succinat-Dehydrogenaseinhibitoren, wie
Fenfuram, Furcarbanil, Cyclafluramid, Furmecyclox, Seedvax, Metsulfovax, Pyrocarbolid, Oxycarboxin, Shirlan, Mebenil (Mepronil), Benodanil, Flutolanil (Moncut);
Naphthalin-Derivate, wie Terbinafin, Naftifin, Butenafin, 3-Chlor-7-(2-aza-2,7,7-trimethyl-oct-3-en-5-in);
Sulfenamide, wie Dichlorfluanid, Tolylfluanid, Folpet, Fluorfolpet; Captan, Captofol;
Benzimidazole, wie Carbendazim, Benomyl, Furathiocarb, Fuberidazole, Thiophonatmethyl;
Thiabendazole oder deren Salze;
Thiocyanate, wie Thiocyanatomethylthiobenzothiazol, Methylenbisthiocyanat;
Morpholinderivate, wie Tridemorph, Fenpropimorph, Falimorph, Dimethomorph, Dodemorph, Aldimorph, Fenpropidin und deren arylsulfonsauren Salze, wie z.B. deren Toluolsulfonsäure- oder p-Dodecylphenylsulfonsäuresalze;
lodderivate, wie Diiodmethyl-p-tolylsulfon, 3-lod-2-propinylalkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 6-Iod-3-oxo-hex-5-inolbutylcarbamat, 6-Iod-3-oxo-hex-5-inol-phenylcarbamat, 3-Iod-2-propinyl-n-hexylcarbamat, 3-Iod-2-propinyl-cyclohexylcarbamat, 3-Iod-2-propinyl-phenylcarbamat, 3-Iod-2-propinyl-butylcarbamat;
Phenolderivate, wie Tribromphenol, Tetrachlorphenol, 3-Methyl-4-chlorphenyl, Dichlorphen, o-Phenylphenol, m-Phenylphenol, p-Phenylphenol, 2-Benzyl-4-chlorphenol;
Bromderivate, wie 2-Brom-2-nitro-1,3-propandiol;
Isothiazolinone, wie N-Methylisothiazolin-3-on, 5-Chlor-N-methyl-isothiazolin-3-on, 4,5-Dichlor-N-octylisothiazolin-3-on, 4,5-Dichlor-2-octyl-2H-isothiazol-3-on, N-Octyl-isothiazolin-3-on, Benzisothiazolinon, 4,5-Trimethylen-isothiazolinon;
Pyridine oder Pyrimidine, wie 1-Hydroxy-2-pyridinthion und dessen Na-, Fe-, Mn-, Zn-Salze, Tetrachlor-4-methylsulfonylpyridin, Pyrimethanil, Mepanipyrim, Dipyrithion;
Metallseifen, wie Zinn-, Kupfer-, Zinknaphthenat, -octoat, -2-ethylhexanoat, -oleat, - phosphat, -benzoat;
Dialkyldithiocarbamate, wie Na- und Zn-Salze von Dialkyldithiocarbamaten, Tetramethylthiuramdisulfid;
Dithiocarbamate, Cufraneb, Ferbam, Mancopper, Mancozeb, Maneb, Metam, Metiram, Thiram, Zineb, Ziram;
Nitrile, wie 2,4,5,6-Tetrachlorisophthalodinitril, 2,3,5,6-Tetrafluorterephthalodinitril;
Benzthiazole, wie 2-Mercaptobenzothiazol;
Chinoline, wie 8-Hydroxychinolin und deren Cu-Salze;
Benzamide, wie 2,6-Dichlor-N-(4-trifluormethylbenzyl)-benzamid (XRD-563);
Borverbindungen, wie Borsäure, Borsäureester, Borax, Boroxid, Di-Natriumoctaborat-tetrahydrat, Dinatriumtetraborat;
Formaldehyd und Formaldehyd-abspaltende Verbindungen, wie Benzylalkoholmono-(poly)-hemiformal, Oxazolidin, Hexahydro-S-triazin, N-Methylolchloracetamid, Paraformaldehyd, Nitropyrin, Oxolinsäure, Tecloftalam; und
Salze der Sorbinsäure, wie Natriumsorbat, Kaliumsorbat.

Weitere Fungizide können aus der Gruppe, bestehend aus Acypetacs, 2-Aminobutan, Ampropylfos, Anilazin, Benalaxyl, Bupirimat, Chinomethionat, Chlorfenapyr, Chlorneb, Chlozolinat, Cymoxanil, Dazomet, Diclomezin, Dichlofluanid, Dichloram, Diethofencarb, Dimethirimol, Dinocab, Dithianon, Dodin, Drazoxolon, Edifenphos, Ethirimol, Etridiazol, Fenarimol, Fenitropan, Fentinacetat, Fentin, Fentinhydroxid, Ferimzon, Fluazinam, Fluromid, Flusulfamid, Flutriafol, Fosetyl, Fthalid, Furalaxyl, Glutaraldehyd, Guazatin, Hymexazol, Iprobenfos, Iprodion, Isoprothiolan, Metalaxyl, Methasulfocarb, Nitrothal-isopropyl, Nuarimol, Ofurace, Oxadiyl, Perflurazoat, Pencycuron, Phosdiphen, Pimaricin, Piperalin, Procymidon, Propamocarb, Propineb, Pyrazophos, Pyrifenox, Pyroquilon, Quintozen, Teerölen, Tecnazen, Thicyofen, Thiophanate-methyl, Tolclofos-methyl, Tolylfluanid, Triazoxid, Trichlamid, Tricyclazol, Triforin, Vinclozolin, oder einer Kombination davon, ausgewählt werden.

Als Insektizide können beispielsweise die folgenden Verbindungen einzeln oder in einer Kombination eingesetzt werden:
Phosphorsäureester, wie Azinphosethyl, Azinphosmethyl, α-1-(4-Chlorphenyl)-4-(O-ethyl, S-propyl)phosphoryloxypyrazol, Chlorpyrifos, Coumaphos, Demeton, Demeton-S-methyl, Diazinon, Dichlorvos, Dimethoat, Ethoat, Ethoprophos, Etrimfos, Fenitrothion, Fenthion, Heptenophos, Parathion, Parathion-methyl, Phosalon, Phoxim, Pirimiphos-ethyl, Pirimiphos-methyl, Profenofos, Prothiofos, Sulfprofos, Triazophos und Trichlorphon;
Carbamate, wie Aldicarb, Bendiocarb, α-2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, wie Dimethyl(phenyl)silyl-methyl-3-phenoybenzylether, wie z.B. Dimethyl-(4-ethoxyphenyl)silylmethyl-3-phenoxybenzylether oder (Dimethylphenyl)-silyl-methyl-2-phenoxy-6-pyridylmethylether, wie z.B. Dimethyl-(9-ethoxy-phenyl)-silylmethyl-2-phenoxy-6-pyridylmethylether, oder [(Phenyl)-3-(3-phenoxyphenyl)-propyl](dimethyl)-silane, wie z. B. (4-Ethoxyphenyl)-[3-(4-fluor-3-phenoxyphenylpropyl]dimethylsilan, Silafluofen;
Pyrethroide, wie Allethrin, Alphamethrin, Bioresmethrin, Byfenthrin, Cycloprothrin, Cyfluthrin, Decamethrin, Cyhalothrin, Cypermethrin, Deltamethrin, α-Cyano-3-phenyl-2-methylbenzyl-2,2-dimethyl-3-(2-chlor-2-trifluormethylvinyl)cyclopropancarboxylat, Etofenprox, Fenpropathrin, Fenfluthrin, Fenvalerat, Flucythrinat, Flumethrin, Fluvalinat, Permethrin, Pyrethrum, Resmethrin und Tralomethrin;
Nitroimine und Nitromethylene, wie 1-[{6-Chlor-3-pyridinyl)-methyl]-4,5-dihydro-N-nitro-1H-imidazol-2-amin (Imidacloprid), N-[(6-Chlor-3-pyridyl)methyl-]N²-cyano-N¹-methylacetamid; und
Benzoylharnstoffe, wie Chlorfluazuron, Diflubenzuron, Flufenoxuron, Flucycloxuron, Hexaflumuron, Penfluron, Teflubenzuron, Triflumuron und andere Entwicklungsinhibitoren, wie beispielsweise Benzoesäure-[2-benzoyl-1-(1,1-dimethylethyl)]-hydrazid, 2,6-Dimethoxy-N-[5]-4-(pentafluorethoxy)-phenyl-[2,3,4-thiadiazol-2-yl]-benzamid, N-Cyclopropyl-1,3,5-triazin-2,4-triamin, 2-(4-Phenoxyphenoxy)-ethylethylcarbamat, 1-(Decycloxy)-4-[(6-methoxy-4-hexinyl)-oxy]benzol, (2-Propinyl)-4-methoxybenzoat, Fenoxycarb, Pyriproxyfen, Triarathen, Thiapronil, Hexythiazox, Clofentezin, 4-Chlor-5-(6-chlor-3-pyridylmethoxy)-2-(3,4-dichlorphenyl)-pyridazin-3(2H)-on, Buprofezin, Hydropren, Kinopren, Methopren, Cycloprat, Gusathin, Padan, Paraxon, Tribunil und Tripren.

Weitere Insektizide können aus der Gruppe, bestehend aus Abamectin, AC 303,630, Acephat, Acrinathrin, Alanycarb, Aldoxycarb, Aldrin, Ammoniumbifluorid, Amitraz, Azamethiphos, Bacillus thuringiensis, Phosmet, Phosphamidon, Phosphin, Prallethrin, Propaphos, Propetamphos, Prothoat, Pyraclofos, Pyrethrinen, Pyridaben, Pyridafenthion, Pyriproxyfen, Quinalphos, RH-7988, Rotenon, Sulfotep, Teeröl, Teflubenzuron, Tefluthrin, Temephos, Terbufos, Tetrachlorvinphos, Tetramethrin, o-2-tert-Butylpyrimidin-5-yl-o-isopropylphosphorothiat, Thiacloprid, Thiocyclam, Thiofanox, Thiometon, Tralomethrin, Triflumuron, Trimethacarb, Vamidothion, Xylylcarb, Benfuracarb, Bensultap, Bifenthrin, Bioallethrin, Merbioaliethrin-(S)-cyclopentenylisomer, Bromophos, Bromophosethyl, Buprofezin, Cadusafos, Calciumpolysulfid, Carbophenothion, Cartap, Chinomethionat, Chlordan, Chlorfenvinphos, Chlorfluazuron, Chlormephos, Chlorpikrin, Chlorpyrifos, Cyanophos, Beta-Cyfluthrin, Alphacypermethrin, Cyophenothrin, Cyromazin, Dazomet, DDT, Demeton-S-methylsulphon, Diafenthiuron, Dialifos, Dicrotophos, Diflubenzuron, Dinoseb, Dioxabenzofos, Diaxacarb, Disulfoton, DNOC, Empenthrin, Endosulfan, EPN, Esfenvalerat, Ethiofencarb, Ethion, Etofenprox, Fenobucarb, Fenoxycarb, Fensulfothion, Fipronil, Flucycloxuron, Flufenprox, Flufenoxuron, Fonofos, Formetanat, Formothion, Fosmethilan, Furathiocarb, Heptachlor, Hexaflumuron, Hydramethylnon, Hydropren, IPSP, Isazofos, Isofenphos, Isoprothiolan, Isoxathion, lodfenphos, Kadethrin, Lindan, Malathion, Mecarbam, Mephosfolan, Metam, Methacrifos, Methamidophos, Methidathion, Methiocarb, Methopren, Methoxychlor, Methyl-isothiocyanat, Metholcarb, Mevinphos, Monocrotophos, Naled, Nikotin, Omethoat, Oxydemetonmethyl, Pentachlorphenol, Phenothrin, Phenthoat, Phorat, oder einer Kombination davon, ausgewählt werden.

Gemäß einer bevorzugten Ausführungsform der vorliegenden Erfindung enthält das Holzschutzmittel ferner eine wässrige Lösung und/oder Suspension von einem oder mehreren Biozid(en), ausgewählt aus Kupfersalzen, Kupferkomplexen, Mischsalzen, Oxiden, Dialkyldithiocarbamaten, Dithiocarbamaten und Diazeniumverbindungen oder einer Kombination davon. Durch den Zusatz einer solchen wässrigen Lösung und/oder Suspension können die bioziden Eigenschaften des Holzschutzmittels weiter verstärkt oder für einen spezifischen Anwendungsfall eingestellt werden.

Beispiele für geeignete Kupfersalze umfassen Kupfersulfat, -carbonat, - hydroxidcarbonat, -dihydroxid, -chlorid, -ammoniakkomplexe, -aminkomplexe und -diazeniumkomplexe, sowie Kupfersulfat, -carbonat, -hydroxidcarbonat und -chlorid als Partikel in mikronisierter Form (Partikelgröße von 30 nm bis 5000 nm, bevorzugt von 50 nm bis 800 nm).

Beispiele für geeignete Mischsalze umfassen Kupfer-/Borsalz-Gemische, Kupfer-/Chrom-/Borsalz-Gemische und Kupfer-/Chrom-/Arsensalz-Gemische.

Beispiele für geeignete Oxide umfassen Tributylzinnoxid, Cu₂O, CuO und ZnO.

Beispiele für geeignete Dialkyldithiocarbamate umfassen Na- und Zn-Salze von Dialkyl-dithiocarbamaten sowie Tetramethylthiuramdisulfid.

Beispiele für geeignete Dithiocarbamate umfassen Cufraneb, Ferbam, Mancopper, Mancozeb, Maneb, Metam, Metiram, Thiram, Zineb und Ziram.

Beispiele für geeignete Diazenium-Verbindungen umfassen Tris-N-(cyclohexyldiazeniumdioxy)-Aluminium, N-(Cyclohexyldiazeniumdioxy)tributylzinn, N-(Cyclo-hexyldiazeniumdioxy)-Kalium und Bis-N-(cyclohexyldiazeniumdioxy)-Kupfer.

Gemäß einer bevorzugten Ausführungsform der vorliegenden Erfindung ist oder sind die Polyelektrolyt(en) nicht bioabbaubar. Dies gilt insbesondere für die letzte, außen liegende Polyelektrolythülle, die bereits über ihre chemische Zusammensetzung für einen bakteriellen Abbau möglichst unzugänglich sein sollte, um die innen liegenden Biozide sicher vor solchem zu schützen und deren Lebensdauer im Holz zu erhöhen.

Gemäß einer bevorzugten Ausführungsform der vorliegenden Erfindung ist oder sind der oder die Polyelektrolyt(en) mit einem oder mehreren bakterizid wirksamen Biozid modifiziert und/oder beladen. Durch das Modifizieren oder Beladen des oder der Polyelektrolyten wird die Langzeitstabilität des Holzschutzmittels weiter erhöht, da bereits an der äußeren Hülle der einzelnen Emulsionspartikel eine bakterizide Wirkung vorliegt und somit die Einwirkung von Exo-Enzymen auf den Wirkstoff bereits bei einer einschichtigen Polyelektrolythülle stark vermindert wird. Dies gilt insbesondere für den Fall, dass die letzte, außen liegende Polyelektrolythülle nicht über ihre chemische Zusammensetzung vor bakteriellem Abbau geschützt werden kann. In einer solchen Situation kann eine oder jede Polyelektrolythülle mit einer oder mehreren bakterizid wirkenden Substanz(en) ausgestattet werden, die entweder über ihren ionischen Charakter (wie z.B. Schwermetallionen wie Silber, Zink, Kupfer, usw.) und/oder über van der Waals-Bindungen (wie z.B. Isothiazolinone, Antibiotika, usw.) auf der Hülle fixiert werden und/oder im Polyelektrolyten selbst als Copolymer dienen (wie z.B. Betaine, polymere Betaine, usw.).

Gemäß einer bevorzugten Ausführungsform der vorliegenden Erfindung ist oder sind der oder die Polyelektrolyt(en) aus der Gruppe, bestehend aus anionischen Polyelektrolyten (Polyanionen), wie z.B. Acrylamid-Copolymeren, Alginaten, Pektinen, Polyacrylsäuren und entsprechenden Copolymeren, Polyvinylschwefelsäure, Polycarbonsäuren, Polyphosphorsäuren, Polysacchariden, Polystyrolsulfonat, anionisch modifizierten Polysacchariden und/oder Polyaminosaccariden, und/oder kationische Polyelektrolyten (Polykationen), wie z.B. Phenolen, Polydiallyldimethylammoniumchlorid, Polyethylenimin, Polyvinylamin, Polyvinylpyridin, Polyvinylammoniumchlorid, kationisch modifizierten Polysacchariden und/oder Polyaminosaccariden, ausgewählt.

Besonders bevorzugt werden als anionische Polyelektrolyten solche auf der Basis von Polystyrolsulfonat (PSS), Polyacrylsäure, anionisch copolymerisierten Polysacchariden und/oder deren amphiphilen Copolymeren sowie Gemischen davon verwendet, und als kationische Polyelektrolyten werden besonders bevorzugt solche auf der Basis von Polyethylen-imin, Polymeren mit kondensierten aromatischen Ringverbindungen, Polyallylamin, kationisch copolymerisierten Polysacchariden, Polybetainen und/oder deren amphiphilen Co-Polymeren sowie Gemischen davon verwendet.

Eine besonders vorteilhafte erfindungsgemäße Wirkung wird erhalten, wenn als anionische Polyelektrolyten solche auf der Basis von Polyacrylsäure und/oder Chitosan sowie deren amphiphilen Copolymeren sowie Gemische davon verwendet werden, und als kationische Polyelektrolyten solche auf der Basis von Polyethylenimin, Polyallylamin, Polybetainen, Chitosan und/oder deren amphiphilen Copolymeren sowie Gemische davon verwendet werden.

Gemäß einer bevorzugten Ausführungsform der vorliegenden Erfindung ist mindestens einer der Polyelektrolyten amphoter und bildet in einem pH-Bereich von 6 bis 14, vorzugsweise 7 bis 11, eine stabile Polyelektrolythülle aus, die in einem pH-Bereich von <6, vorzugsweise in einem pH-Bereich von 2 bis 4, instabil wird. Bei dieser Ausführungsform wird das umhüllte Emulsionspartikel wieder freisetzt, wenn der pH-Wert der Umgebung, in der sich das Emulsionspartikel befindet, unter einen Wert von 6, vorzugsweise in einen Bereich von 2 bis 4, fällt. Dadurch werden die Biozide in einer weitestgehend nicht bioverfügbaren Form im Holz deponiert und erst bei einem aktiven Angriff auf das Holz durch holzzerstörende Pilze und die durch diese bewirkte Reduktion des pH-Wertes freigesetzt. Auf diese Weise wird auch das von dem mit dem erfindungsgemäßen Holzschutzmittel behandelten Holz ausgehende Gefährdungspotential für den Verwender deutlich reduziert, da die Biozide nicht mehr frei im Holz verteilt vorliegen, sondern erst bei Bedarf freigesetzt werden.

Gemäß einer bevorzugten Ausführungsform der vorliegenden Erfindung werden als amphotere Polyelektrolyten beispielsweise amphoterisch copolymerisierte Polysaccharide und/oder Chitosane verschiedener Kettenlängen und/oder amphoterisch copolymerisierte Polyacryl-amide und/oder polymere Betaine und/oder deren amphiphilen Copolymere sowie Gemische davon verwendet.

Besonders bevorzugt werden als amphotere Polyelektrolyte beispielsweise Chitosane verschiedener Kettenlängen und/oder amphoterisch copolymerisierte Polyacrylamide und/oder polymere Betaine und/oder deren amphiphilen Copolymere sowie Gemische davon verwendet. Eine besonders vorteilhafte erfindungsgemäße Wirkung wird erhalten, wenn als amphotere Polyelektrolyten Chitosane verschiedener Kettenlängen und/oder amphoterisch copolymerisierte Polyacrylamide und/oder deren amphiphilen Copolymere sowie Gemische davon verwendet werden.

Gemäß einer bevorzugten Ausführungsform der vorliegenden Erfindung sind die Wirkstoff-Emulsionspartikel in nanoskaligen, porösen Feststoffpartikeln aufgenommen.

Besonders bevorzugt weisen die porösen Feststoffpartikel eine mittlere Teilchengröße von 10 bis 300 nm auf und sind aus einem oder mehreren aus der Gruppe, bestehend aus Zeolithen, Bentoniten, Kieselgur, Schichtsilikaten, mesoporösen Aluminosilikaten, mesoporösen Organosilikaten, mesoporösen Silikaten, Calciumcarbonat, Calciumoxid, Calciumphosphat, Fullerenen, Graphenen und mesoporösen Aluminiumverbindungen, ausgewählt.

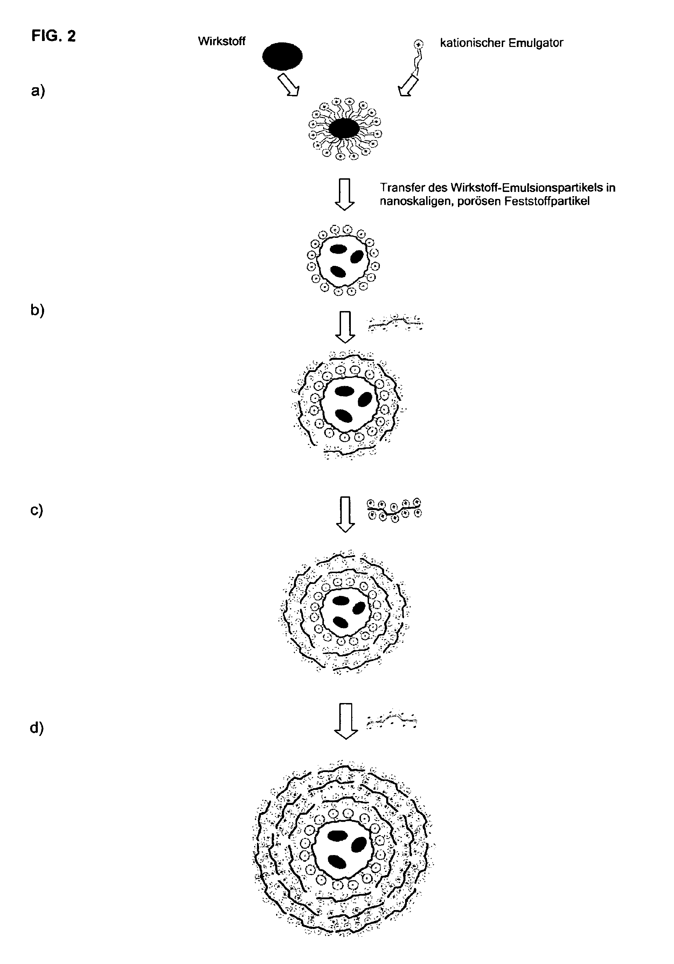

Der Vorgang der Veränderung der Oberflächenladung von kationischen Emulsionspartikeln durch mehrfache Zugabe von Polyelektrolyten mit unterschiedlicher Ladung in dem Fall, dass die vorstehend genannten porösen Feststoffpartikel verwendet werden, ist prinzipiell mit dem in der Fig. 1 gezeigten Vorgang identisch, jedoch werden vor dem Schritt der ersten Zugabe von Polyanionen die porösen Feststoffpartikel zugesetzt, so dass die Wirkstoff-Emulsionspartikel in die porösen Feststoffpartikel überführt werden und zunächst eine kationische Oberflächenladung der porösen Feststoffpartikel vorliegt. Dieser Vorgang ist schematisch in der Fig. 2 gezeigt. Im Übrigen wird die Fig. 2 nicht näher erläutert, da sie ansonsten mit Fig. 1 identisch ist.

Das erfindungsgemäße Holzschutzmittel ist vorzugsweise derart zusammengesetzt, dass es in gebrauchsfertiger Form 0,001 bis 15 Gew.-% des mindestens einen bioziden Wirkstoffs, 0,01 bis 30 Gew.-% des mindestens einen kationischen Emulgators, 0,01 bis 30 Gew.-% Polyelektrolyt und gegebenenfalls 0,01 bis 30 Gew.-% von einem oder mehreren Bioziden, ausgewählt aus Kupfersalzen, Kupferkomplexen, Mischsalzen, Oxiden, Dialkyldithiocarbamaten, Dithiocarbamaten und Diazeniumverbindungen oder einer Kombination davon in komplexierter, gelöster oder dispergierter Form enthält.

Mehr bevorzugt ist das erfindungsgemäße Holzschutzmittel derart zusammengesetzt, dass es 0,005 bis 5 Gew.-% des mindestens einen bioziden Wirkstoffs, 0,1 bis 10 Gew.-% des mindestens einen kationischen Emulgators, 0,1 bis 30 Gew.-% Polyelektrolyt und gegebenenfalls 0,1 bis 25 Gew.-% von einem oder mehreren Bioziden, ausgewählt aus Kupfersalzen, Kupferkomplexen, Mischsalzen, Oxiden, Dialkyldithiocarbamaten, Dithiocarbamaten und Diazeniumverbindungen oder einer Kombination davon in komplexierter, gelöster oder dispergierter Form enthält.

Insbesondere ist das erfindungsgemäße Holzschutzmittel derart zusammengesetzt, dass es 0,01 bis 0,5 Gew.-% des mindestens einen bioziden Wirkstoffs, 0,1 bis 10 Gew.-% des mindestens einen kationischen Emulgators, 0,1 bis 30 Gew.-% Polyelektrolyt und gegebenenfalls 0,5 bis 20 Gew.-% von einem oder mehreren Bioziden, ausgewählt aus Kupfersalzen, Kupferkomplexen, Mischsalzen, Oxiden, Dialkyldithiocarbamaten, Dithiocarbamaten und Diazeniumverbindungen oder einer Kombination davon in komplexierter, gelöster oder dispergierter Form enthält.

Wenn die vorstehend genannten nanoskaligen, porösen Feststoffpartikel verwendet werden, so liegen diese in dem erfindungsgemäßen Holzschutzmittel in einem Anteil von 0,01 bis 15 Gew.-%, vorzugsweise von 0,1 bis 10 Gew.-%, insbesondere von 1 bis 5 Gew.-% vor.

Die vorliegende Erfindung wird durch Beispiele weiter erläutert, die jedoch nicht beschränkend aufzufassen sind.

### Beispiele

### Beispiel 1: Erfindungsgemäßes Beispiel einer Holzschutzmittelformulierung, die einen Wirkstoff mit einer Polyelektrolytschicht enthält

Es werden die folgenden Ausgangsstoffe in den in der Tabelle 1 angegebenen Anteilen verwendet:

**Tabelle 1**

| Ausgangsstoff | Gew.-% | Funktion |
|---|---|---|
| | | |
| Propiconazol | 0,2 | Biozid (Funqizid) |
| Cypermethrin | 0,02 | Biozid (Insektizid) |
| Dipropylenglycolmethylether | 0,2 | Hilfslösungsmittel |
| Bardap 26 [N,N-Didecyl-N-methyl-poly(oxyethyl)ammoniumpropionat] | 2,0 | Biozid (Fungizid) und kationischer Emulgator |
| PAM/AA A-2 [Poly(acrylamid-co-Na-acrylat)] | 4,0 | Polyanion (20 mol-% ionische Gruppen) |
| Wasser | ad 100 | Lösungsmittel |

Propiconazol und Cypermethrin werden zunächst in Dipropylenglycolmethylether gelöst und die erhaltene Lösung wird Bardap 26 zugesetzt, worauf das Gemisch in an sich bekannter Weise durch Scherung in eine Mikroemulsion überführt wird. Nach der Zugabe von Wasser wird gerührt und PAM/AA A-2 wird zugesetzt, worauf weiter gerührt wird. Nach der abschließenden Zugabe von Wasser wird weiter gerührt, bis eine homogene Emulsion erhalten wird.

### Beispiel 2: Erfindungsgemäßes Beispiel einer Holzschutzmittelformulierung, die einen Wirkstoff mit einer Polyelektrolytschicht unter Verwendung eines nanoskaligen porösen Templats enthält

Es werden die folgenden Ausgangsstoffe in den in der Tabelle 2 angegebenen Anteilen verwendet:

**Tabelle 2**

| Ausgangsstoff | Gew.-% | Funktion |
|---|---|---|
| | | |
| Propiconazol | 0,2 | Biozid (Fungizid) |
| Cypermethrin | 0,02 | Biozid (Insektizid) |
| Dipropylenglycolmethylether | 0,2 | Hilfslösungsmittel |
| Bardap 26 [N, N-Didecyl-N-methyl-poly(oxyethyl)ammoniumpropionat] | 2,0 | Biozid (Fungizid) und kationischer Emulgator |
| Zeolith | 6 | mikroporöses Aluminosilikat (80 nm Partikelgröße) |
| PAM/AA A-2 [Poly(acrylamid-co-Na-acrylat)] | 4,0 | Polyanion (20 mol-% ionische Gruppen) |
| Wasser | ad 100 | Lösungsmittel |

Propiconazol und Cypermethrin werden zunächst in Dipropylenglycolmethylether gelöst und die erhaltene Lösung wird Bardap 26 zugesetzt, worauf das Gemisch in an sich bekannter Weise durch Scherung in eine Mikroemulsion überführt wird. In die Mikroemulsion wird der mikroporöse Zeolith eingebracht und nach der Zugabe von Wasser wird gerührt und PAM/AA A-2 wird zugesetzt, worauf weiter gerührt wird. Nach der abschließenden Zugabe von Wasser wird weiter gerührt, bis eine homogene Emulsion erhalten wird.

### Beispiel 3: Erfindungsgemäßes Beispiel einer Holzschutzmittelformulierung, die einen Wirkstoff mit drei Polyelektrolytschichten enthält

Es werden die folgenden Ausgangsstoffe in den in der Tabelle 3 angegebenen Anteilen verwendet:

**Tabelle 3**

| Ausgangsstoff | Gew.-% | Funktion |
|---|---|---|
| | | |
| Propiconazol | 0,2 | Biozid (Fungizid) |
| Cypermethrin | 0,02 | Biozid (Insektizid) |
| Dipropylenglycolmethylether | 0,2 | Hilfslösungsmittel |
| Bardap 26 [N, N-Didecyl-N-methyl-poly(oxyethyl)ammoniumpropionat] | 2,0 | Biozid (Fungizid) und kationischer Emulgator |
| PAM/AA A-2 [Poly(acrylamid-co-Na-acrylat)] | 10,0 | Polyanion (20 mol-% ionische Gruppen) |
| Poly-DADMAC [Poly(diallyldimethylammonium)-chlorid] | 5.0 | Polykation (100 mol-% ionische Gruppen) |
| Wasser | ad 100 | Lösungsmittel |

Propiconazol und Cypermethrin werden zunächst in Dipropylenglycolmethylether gelöst und die erhaltene Lösung wird Bardap 26 zugesetzt, worauf das Gemisch in an sich bekannter Weise durch Scherung in eine Mikroemulsion überführt wird. Nach der Zugabe von Wasser wird gerührt und PAM/AA A-2 wird zugesetzt, worauf weiter gerührt wird. Nach dem Entfernen von frei gelöstem PAM/AA A-2 wird Poly-DADMAC zugesetzt, worauf weiter gerührt wird. Anschließend wird frei gelöstes Poly-DADMAC entfernt und weiteres PAM/AA A-2 zugesetzt, worauf gerührt wird. Nach der abschließenden Zugabe von Wasser wird weiter gerührt, bis eine homogene Emulsion erhalten wird.

### Beispiel 4: Erfindungsgemäßes Beispiel einer Holzschutzmittelformulierung, die einen Wirkstoff mit drei Polyelektrolytschichten unter Verwendung eines nanoskaligen porösen Templats enthält

Es werden die folgenden Ausgangsstoffe in den in der Tabelle 4 angegebenen Anteilen verwendet:

**Tabelle 4**

| Ausgangsstoff | Gew.-% | Funktion |
|---|---|---|
| | | |
| Propiconazol | 0,2 | Biozid (Fungizid) |
| Cypermethrin | 0,02 | Biozid (Insektizid) |
| Dipropylenglycolmethylether | 0,2 | Hilfslösungsmittel |
| Bardap 26 [N, N-Didecyl-N-methyl-poly(oxyethyl)ammoniumpropionat] | 2,0 | Biozid (Fungizid) und kationischer Emulgator |
| Zeolith | 6 | mikroporöses Aluminosilikat (80 nm Partikelgröße) |
| PAM/AA A-2 [Poly(acrylamid-co-Na-acrylat)] | 10,0 | Polyanion (20 mol-% ionische Gruppen) |
| Poly-DADMAC [Poly(diallyldimethylammonium)-chlorid] | 5.0 | Polykation (100 mol-% ionische Gruppen) |
| Wasser | ad 100 | Lösungsmittel |

Propiconazol und Cypermethrin werden zunächst in Dipropylenglycolmethylether gelöst und die erhaltene Lösung wird Bardap 26 zugesetzt, worauf das Gemisch in an sich bekannter Weise durch Scherung in eine Mikroemulsion überführt wird. In die Mikroemulsion wird der mikroporöse Zeolith eingebracht und nach der Zugabe von Wasser wird gerührt und PAM/AA A-2 wird zugesetzt, worauf weiter gerührt wird. Nach dem Entfernen von frei gelöstem PAM/AA A-2 wird Poly-DADMAC zugesetzt, worauf weiter gerührt wird. Anschließend wird frei gelöstes Poly-DADMAC entfernt und weiteres PAM/AA A-2 zugesetzt, worauf gerührt wird. Nach der abschließenden Zugabe von Wasser wird weiter gerührt, bis eine homogene Emulsion erhalten wird.

Vergleichsbeispiel: Nicht-erfindungsgemäße Holzschutzmittelformulierung, die einen Wirkstoff ohne Polyelektrolytschicht enthält

Es werden die folgenden Ausgangsstoffe in den in der Tabelle 5 angegebenen Anteilen verwendet:

**Tabelle 5**

| Ausgangsstoff | Gew.-% | Funktion |
|---|---|---|
| | | |
| Propiconazol | 0,2 | Biozid (Funqizid) |
| Cypermethrin | 0,02 | Biozid (Insektizid) |
| Dipropylenglycolmethylether | 0,2 | Hilfslösungsmittel |
| Bardap 26 [N, N-Didecyl-N-methyl-poly(oxyethyl)ammoniumpropionat] | 2,0 | Biozid (Fungizid) und kationischer Emulgator |
| Wasser | ad 100 | Lösungsmittel |

Propiconazol und Cypermethrin werden zunächst in Dipropylenglycolmethylether gelöst und die erhaltene Lösung wird Bardap 26 zugesetzt, worauf das Gemisch in an sich bekannter Weise durch Scherung in eine Mikroemulsion überführt wird. Nach der Zugabe von Wasser wird gerührt, bis eine homogene Emulsion erhalten wird.

Die Bestimmung der Verteilung der Biozide im Holz wird wie folgt durchgeführt:
- Abhobeln einer definierten Holzschicht von der Holzoberfläche;
- Auffangen der dabei entstehenden Holzspäne;
- Wiegen der Holzspäne;
- Extraktion des Wirkstoffes aus den Holzspänen;
- Analyse der in den Spänen enthaltenen Wirkstoffmenge;
- Normieren der gefundenen Wirkstoffmenge auf das Gewicht der Späne;
- Umrechnung in Gramm Wirkstoff pro Kubikmeter Holz.

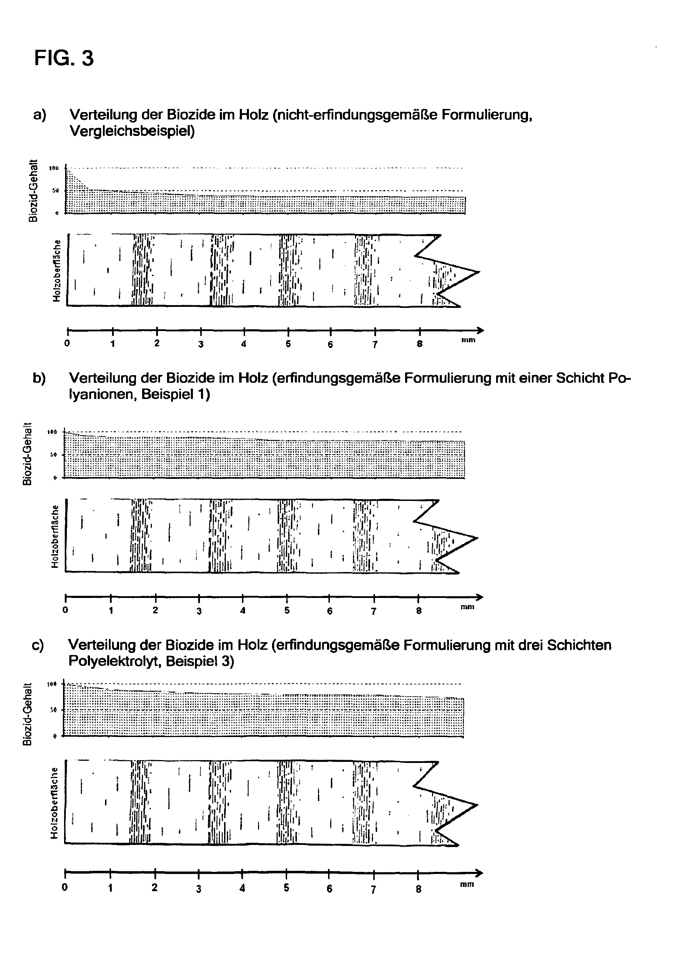

Durch das Abhobeln und Analysieren mehrerer aufeinanderfolgender Holzschichten entsteht auf diese Weise ein Profil des Wirkstoffgehaltes in zunehmenden Abständen von der behandelten Holzoberfläche wie in Fig. 3 dargestellt.

Wie aus der Fig. 3a) ersichtlich ist, ist im Fall der nicht-erfindungsgemäßen Formulierung des Vergleichsbeispiels die Konzentration der Biozide in tieferen Schichten sehr viel geringer als bei den erfindungsgemäßen Formulierungen (Beispiele 1 und 3), die in den Figuren 3b) und 3c) gezeigt ist. Ferner zeigt die Fig. 3a), dass die Konzentration der Biozide bereits nach etwa 0,5 mm Eindringtiefe sehr schnell auf etwa die Hälfte abfällt, während die Konzentration gemäß den Figuren 3b) und 3c) nur sehr langsam abfällt und eine hohe Konzentration bis zu einer Eindringtiefe von etwa 8 mm gemessen wurde. Bei der erfindungsgemäßen Formulierung gemäß Beispiel 3, die in der Fig. 3c) dargestellt wird, zeigt sich ferner, dass das Vorliegen von drei Polyelektrolytschichten im Vergleich zum Beispiel 1, bei dem nur eine Polyelektrolytschicht vorliegt, zu einer etwas niedrigeren Konzentration der Biozide in tieferen Schichten des Holzes führt. Dieser Nachteil wird jedoch dadurch kompensiert, dass durch das Vorliegen von drei Polyelektrolytschichten auf mechanischem Weg sichergestellt wird, dass praktisch keine mikrobiellen Exo-Enzyme in die umhüllten Emulsionspartikel eindringen und den biologischen Abbau des Wirkstoffs bewirken können.

## Patentansprüche

1. Holzschutzmittel auf Wasserbasis, umfassend eine Biozid-enthaltende wässrige Emulsion, die mindestens einen bioziden Wirkstoff und mindestens einen kationischen Emulgator enthält und der mindestens eine biozide Wirkstoff durch den mindestens einen kationischen Emulgator unter Bildung von Wirkstoff-Emulsionspartikeln emulgiert ist, **dadurch gekennzeichnet, dass** die Wirkstoff-Emulsionspartikel jeweils von einer mindestens einschichtigen Polyelektrolythülle umgeben sind, so dass die Nettoladung des umhüllten Wirkstoff-Emulsionspartikels Null oder negativ ist.

2. Holzschutzmittel nach Anspruch 1, bei dem die Polyelektrolythülle einschichtig ist und aus einem anionischen Polyelektrolyten ausgebildet ist.

3. Holzschutzmittel nach Anspruch 1, bei dem die Polyelektrolythülle mehrschichtig ist und abwechselnd aus einem anionischen Polyelektrolyten und einem kationischen Polyelektrolyten ausgebildet ist, wobei die äußerste Schicht aus einem anionischen Polyelektrolyten besteht.

4. Holzschutzmittel nach einem der Ansprüche 1 bis 3, bei dem der kationische Emulgator ein biozider kationischer Emulgator ist.

5. Holzschutzmittel nach Anspruch 4, bei dem der biozide kationische Emulgator eine quarternäre Ammoniumverbindung ist.

6. Holzschutzmittel nach einem der Ansprüche 1 bis 5, bei dem der biozide Wirkstoff aus Fungiziden, Insektiziden oder einer Kombination davon ausgewählt ist.

7. Holzschutzmittel nach einem der Ansprüche 1 bis 6, das ferner eine wässrige Lösung und/oder Suspension von einem oder mehreren Biozid(en), ausgewählt aus Kupfersalzen, Kupferkomplexen, Mischsalzen, Oxiden, Dialkyldithiocarbamaten, Dithiocarbamaten und Diazeniumverbindungen oder einer Kombination davon, enthält.

8. Holzschutzmittel nach einem der Ansprüche 1 bis 7, bei dem der oder die Polyelektrolyt(en) nicht bioabbaubar ist oder sind.

9. Holzschutzmittel nach einem der Ansprüche 1 bis 8, bei dem der oder die Polyelektrolyt(en) mit einem oder mehreren bakterizid wirksamen Biozid modifiziert und/oder beladen ist oder sind.

10. Holzschutzmittel nach einem der Ansprüche 1 bis 9, bei dem mindestens einer der Polyelektrolyten amphoter ist und in einem pH-Bereich von 6 bis 14 eine stabile Polyelektrolythülle ausbildet, die in einem pH-Bereich von <6 instabil wird.

11. Holzschutzmittel nach einem der Ansprüche 1 bis 9, bei dem der oder die Polyelektrolyt(en) aus der Gruppe, bestehend aus Acrylamid-Copolymeren, Alginaten, Pektinen, Polyacrylsäuren und entsprechenden Copolymeren, Polyvinylschwefelsäure, Polycarbonsäuren, Polyphosphorsäuren, Polysacchariden, Polystyrolsulfonat, anionisch modifizierten Polysacchariden und/oder Polyaminosaccariden als anionische Polyelektrolyten (Polyanionen), und/oder Phenolen, Polydiallyldimethylammoniumchlorid, Polyethylenimin, Polyvinylamin, Polyvinylpyridin, Polyvinylammoniumchlorid, kationisch modifizierten Polysacchariden und/oder Polyaminosaccariden als kationische Polyelektrolyten (Polykationen), ausgewählt ist oder sind.

12. Holzschutzmittel nach Anspruch 10, bei dem der mindestens eine amphotere Polyelektrolyt aus der Gruppe, bestehend aus amphoterisch copolymerisierten Polysacchariden und/oder Chitosanen verschiedener Kettenlängen und/oder amphoterisch copolymerisierten Polyacrylamiden und/oder polymeren Betainen und/oder deren amphiphilen Copolymeren sowie Gemischen davon, ausgewählt ist.

13. Holzschutzmittel nach einem der Ansprüche 1 bis 12, bei dem die Wirkstoff-Emulsionspartikel in nanoskaligen, porösen Feststoffpartikeln aufgenommen sind.

14. Holzschutzmittel nach Anspruch 13, bei dem die porösen Feststoffpartikel eine mittlere Teilchengröße von 10 bis 300 nm aufweisen und aus einem oder mehreren aus der Gruppe, bestehend aus Zeolithen, Bentoniten, Kieselgur, Schichtsilikaten, mesoporösen Aluminosilikaten, mesoporösen Organosilikaten, mesoporösen Silikaten, Calciumcarbonat, Calciumoxid, Calciumphosphat, Fullerenen, Graphenen und mesoporösen Aluminiumverbindungen, ausgewählt sind.

## Claims

1. Water-based wood protection agent, comprising a biocide-containing aqueous emulsion which contains at least one biocidal active agent and at least one cationic emulsifier and the at least one biocidal active agent is emulsified by the at least one cationic emulsifier, forming active agent emulsion particles, **characterized in that** the active agent emulsion particles are each surrounded by an at least single-layered polyelectrolyte shell, so that the net charge of the coated active agent emulsion particle is zero or negative.

2. Wood protection agent according to claim 1, wherein the polyelectrolyte shell is single-layered and is formed from an anionic polyelectrolyte.

3. Wood protection agent according to claim 1, wherein the polyelectrolyte shell is multiple-layered and is formed, in alternating manner, from an anionic polyelectrolyte and a cationic polyelectrolyte, the outer layer consisting of an anionic polyelectrolyte.

4. Wood protection agent according to one of the claims 1 to 3, wherein the cationic emulsifier is a biocidal cationic emulsifier.

5. Wood protection agent according to claim 4, wherein the biocidal cationic emulsifier is a quaternary ammonium compound.

6. Wood protection agent according to one of the claims 1 to 5, wherein the biocidal active agent is selected from fungicides, insecticides or a combination thereof.

7. Wood protection agent according to one of the claims 1 to 6, which also contains an aqueous solution and/or suspension of one or more biocide(s), selected from copper salts, copper complexes, mixed salts, oxides, dialkyldithiocarbamates, dithiocarbamates and diazenium compounds or a combination thereof.

8. Wood protection agent according to one of the claims 1 to 7, wherein the polyelectrolyte(s) is/are not biodegradeable.

9. Wood protection agent according to one of the claims 1 to 8, wherein the polyelectrolyte(s) is/are modified and/or charged with one or more bactericidally active biocide(s).

10. Wood protection agent according to one of the claims 1 to 9, wherein, at least one of the polyelectrolytes is amphoteric and forms a stable polyelectrolyte shell in a pH range from 6 to 14, which polyelectrolyte shell is unstable in a pH range of <6.

11. Wood protection agent according to one of the claims 1 to 9, wherein the polyelectrolyte(s) is/are selected from the group consisting of acrylamide copolymers, alginates, pectins, polyacrylic acids and corresponding copolymers, polyvinyl sulphuric acid, polycarboxylic acids, polyphosphoric acids, polysaccharides, polystyrene sulphonate, anionically modified polysaccharides and/or polyaminosaccharides as anionic polyelectrolytes (polyanions), and/or phenols, polydiallyldimethylammonium chloride, polyethylene imine, polyvinyl amine, polyvinyl pyridine, polyvinylammonium chloride, cationically modified polysaccharides and/or polyaminosaccharides as cationic polyelectrolytes (polycations).

12. Wood protection agent according to claim 10, wherein the at least one amphoteric polyelectrolyte is selected from the group consisting of amphoteric copolymerised polysaccharides and/or chitosans of different chain lengths and/or amphoteric copolymerised polyacrylamides and/or polymeric betaines and/or the amphiphilic copolymers thereof and mixtures thereof.

13. Wood protection agent according to one of the claims 1 to 12, wherein, the active agent emulsion particles are absorbed into nanoscale porous solid particles.

14. Wood protection agent according to claim 13, wherein the porous solid particles have a mean particle size in the range of 10 nm to 300 nm and are selected from one or more of the group consisting of zeolites, bentonites, kieselguhr, sheet silicates, mesoporous aluminium silicates, mesoporous organosilicates, mesoporous silicates, calcium carbonate, calcium oxide, calcium phosphate, fullerenes, graphenes and mesoporous aluminium compounds.

## Revendications

1. Agent de protection du bois à base aqueuse, comprenant une émulsion aqueuse contenant un biocide, qui contient au moins un agent actif biocide et au moins un émulsifiant cationique, et ledit au moins un agent actif biocide est mis en émulsion par ledit au moins un émulsifiant cationique en formant des particules d'émulsion d'agent actif,
**caractérisé en ce que** les particules d'émulsion d'agent actif sont entourées respectivement par une enveloppe en polyélectrolyte présentant au moins une couche, de sorte que la charge nette de la particule d'émulsion d'agent actif enveloppée est nulle ou négative.

2. Agent de protection du bois selon la revendication 1, dans lequel l'enveloppe de polyélectrolyte est monocouche et est réalisée à partir d'un polyélectrolyte anionique.

3. Agent de protection du bois selon la revendication 1, dans lequel l'enveloppe en polyélectrolyte est à plusieurs couches et est formée alternativement d'un polyélectrolyte anionique et d'un polyélectrolyte cationique, de sorte que la couche la plus extérieure est constituée d'un polyélectrolyte anionique.

4. Agent de protection du bois selon l'une des revendications 1 à 3, dans lequel l'émulsifiant cationique est un émulsifiant cationique biocide.

5. Agent de protection du bois selon la revendication 4, dans lequel l'émulsifiant cationique biocide est un composé ammonium quaternaire.

6. Agent de protection du bois selon l'une des revendications 1 à 5, dans lequel l'agent actif biocide est sélectionné parmi les fongicides, les insecticides ou une combinaison de ceux-ci.

7. Agent de protection du bois selon l'une des revendications 1 à 6, qui contient en outre une solution et/ou suspension aqueuse d'un ou plusieurs biocides, sélectionnés parmi des sels de cuivre, des complexes à base de cuivre, des sels mixtes, des oxydes, des dialkyldithiocarbamates, dithiocarbamates et composés diazénium, ou d'une combinaison de ceux-ci.

8. Agent de protection du bois selon l'une des revendications 1 à 7, dans lequel le ou les polyélectrolyte(s) n'est/ne sont pas biodégradable(s).

9. Agent de protection du bois selon l'une des revendications 1 à 8, dans lequel le ou les polyélectrolyte(s) est/sont modifié(s) et/ou chargé(s) avec un ou plusieurs biocide(s) à effet bactéricide.

10. Agent de protection du bois selon l'une des revendications 1 à 9, dans lequel un au moins des polyélectrolytes est amphotérique et forme dans une plage de pH de 6 à 14 une enveloppe de polyélectrolyte stable, qui devient instable dans une plage de pH < 6.

11. Agent de protection du bois selon l'une des revendications 1 à 9, dans lequel le ou les polyélectrolyte(s) est/sont sélectionné(s) parmi le groupe constitué de copolymères acrylamides, alginates, pectines, acides polyacryliques et copolymères correspondants, acides polyvinyle sulfuriques, acides polycarbonés, acides polyphosphorés, polysaccharides, sulfonates de polystyrène, polysaccharides modifiés par voie anionique et/ou polyaminosaccharides à titre de polyélectrolytes anioniques (polyanions), et/ou le groupe constitué de phénolènes, chlorures poly dialkyl diméthyl ammonium, polyéthylène imines, polyvinyle amines, polyvinyle pyridines, chlorures polyvinyle ammonium, polysaccharides modifiés par voie cationique et/ou polyaminosaccharides à titre de polyélectrolytes cationiques (polycations).

12. Agent de protection du bois selon la revendication 10, dans lequel ledit au moins un polyélectrolyte amphotérique est sélectionné parmi le groupe constitué des polysaccharides amphotériques copolymérisés et/ou de chitosanes avec des chaînes de longueurs différentes et/ou des polyacrylamides amphotériques copolymérisés et/ou des bétaïnes polymères et/ou leurs copolymères amphiphiles, ainsi que leurs mélanges.

13. Agent de protection du bois selon l'une des revendications 1 à 12, dans lequel les particules d'émulsion d'agent actif sont absorbées dans des particules solides poreuses à l'échelle des nanomètres.

14. Agent de protection du bois selon la revendication 13, dans lequel les particules solides poreuses ont une taille de particules moyenne de 10 à 300 nm, et sont sélectionnées parmi un ou plusieurs des groupes constitués des zéolithes, bentonites, diatomites, silicates en couches, aluminosilicates mésoporeux, organosilicates mésoporeux, silicates mésoporeux, carbonates de calcium, oxydes de calcium, phosphates de calcium, fullerènes, graphènes et composés aluminium mésoporeux.
